# EUROPÄISCHE PATENTSCHRIFT

(11) **EP 1 997 953 B1**
(45) Veröffentlichungstag und Bekanntmachung des Hinweises auf die Patenterteilung: **01.09.2010**
(21) Anmeldenummer: 07090097.2
(22) Anmeldetag: 11.05.2007
(51) Int. Cl.: D06N 3/14, D06M 15/564, B64C 3/26, A63H 27/00, C08G 18/08, C08G 18/70, C09D 175/06

(54) **Bespanngewebe für Luftfahrzeuge**
Cover fabric for aircraft
Tissu attelé pour aéronef

(43) Veröffentlichungstag der Anmeldung: 03.12.2008
(73) Patentinhaber: Siegfried Lanitz, 04178 Leipzig (DE)
(72) Erfinder: Siegfried Lanitz, 04178 Leipzig (DE)
(74) Vertreter: Boeckh, Tobias

(56) Entgegenhaltungen:
- WO-A-96/14208
- DE-C- 849 051
- GB-A- 2 215 746
- US-A1- 2006 084 336

## Beschreibung

Die Erfindung betrifft ein Bespanngewebe für Luftfahrzeuge sowie ein Verfahren zur Bespannung von Luftfahrzeugen mit dem Gewebe.

Aus dem Stand der Technik sind Bespanngewebe aus Leinen, Baumwolle oder Polyester zur Verwendung für Flugzeuge bekannt. Diese werden mit Nitrozellulosekleber auf zu bespannende Teile eines Luftfahrzeuges aufgebracht und anschließend werden die Gewebe gestrafft. Dabei werden Polyestergewebe mit Hitze geschrumpft und mit Spannlack eingestrichen. Nach diversen Spannlackaufträgen werden noch ein bis zwei silberne Lackschichten zum UV-Schutz aufgetragen. Abschließend wird der Decklack beschichtet.

In der DE 849 051 ist eine Bespannung von Flugzeugen offenbart, welche aus mindestens zwei übereinanderliegenden, mit ihren Kettfäden im Winkel zueinander verlaufenden Gewebestoffbahnen besteht. Dabei wird jede Gewebestoffbahn für sich aufgespannt und diese werden durch eine Behandlung mit Harzen vereinigt. Die Gewebestoffbahnen werden mit lösungsmittelhaltigen Imprägnierungen behandelt und nach dem Aufspannen der Bahnen werden diese mit Spannlack behandelt.

Nachteilig bei den aus dem Stand der Technik bekannten Geweben und deren Verfahren zur Verarbeitung ist, dass bei Verwendung von Polyestergewebe die Gewebefasern zwar vom Nitrozellulosekleber umhüllt werden, dieser sich mit der Faser jedoch nicht verbindet.

Zudem härten Nitrozellulosekleber und -lacke mit der Zeit immer weiter aus und es tritt eine Versprödung der gesamten Verklebung und Bespannung ein. Dadurch wird die Bespannung gegen mechanische Beschädigungen anfällig und es können sogar Teile der Bespannung ohne Fremdeinwirkung abfallen. Letztlich wird bei den aus dem Stand der Technik bekannten Lösungen für die Bespannung eines Flugzeugs nach einigen Jahren eine Neubespannung erforderlich.

Ein weiterer Nachteil an den aus dem Stand der Technik bekannten Lösungen zur Bespannung eines Flugzeuges liegt in der unkontrollierten Gewichtszunahme durch die diversen Farbanstriche und Schichten, die aufgebracht werden. So wurden bei der Verwiegung eines Quadratmeters eines Gewebes aus dem Stand der Technik Grammaturschwankungen von 100 bis 400 g/m² gemessen.

Weiterhin sind aus dem Flugmodellbau Polyestergewebe mit Oberflächenbeschichtung auf Lösemittelbasis bekannt, wobei der heißsiegelfähige Klebstoff rückseitig aufgetragen ist. Zudem sind für Luftfahrzeuge Polyestergewebe mit einer Oberflächenbeschichtung auf Lösemittelbasis bekannt, die sich durch hohe Festigkeit, aber geringen Schrumpf und geringe Weiterreißresistenz auszeichnen. Verklebt werden diese Produkte durch thermoaktivierbare Kleber, die den Nachteil haben, dass sie bei großer Hitze erweichen können und die Bespannung dadurch an Spannkraft verliert und sogar faltig werden kann, bzw. auf dem Kleber zu schwimmen beginnt, was die Gebrauchseigenschaft erheblich einschränkt.

WO-A-96/14208 offenbart ein Bespanngewebe für Luftfahrzeuge aus einem Polyestergewebe, das mit einer Polyurethanbeschichteten Polyesterfolie Verbunden ist.

Ausgehend von diesem Stand der Technik ist, ein Bespannmaterial für Flugzeuge zur Verfügung zu stellen, welches die Nachteile des Stands der Technik vermeidet.

Erfindungsgemäß ist dazu ein Bespanngewebe für Luftfahrzeuge vorgesehen, bestehend aus einem Polyester- oder einem Poly-Ether-Ether-Keton-Gewebe, wobei das Gewebe mit einer vernetzten hitzebeständigen anionisch aliphatischen Polyesterpolyurethan-Dispersion beschichtet ist und die Beschichtung durch Vernetzung einer anionisch aliphatischen Dispersion mit einer OH-Zahl < 0,5 mit einem hydrophilen aliphatischen Polysiocyanat auf der Basis von Hexamethylendiisocyanat mit einem NCO-Wert von 17 bis 18 hergestellt worden ist.

Ein derart beschichtetes erfindungsgemäßes Bespanngewebe weist im Sinne der vorläufigen Erfindung eine erste Beschichtung auf. Auf diese erste Beschichtung können noch weitere Beschichtungen aufgebracht werden und eine derartige Beschichtung kann im Sinne der vorliegenden Erfindung als Grundbeschichtung beschrieben werden.

In einer alternativen Ausgestaltung des erfindungsgemäßen Bespanngewebes ist vorgesehen, dass die anionisch aliphatische Dispersion pigmentiert ist. Bevorzugt ist, dass die Pigmentierung aus Aluminium-Partikeln besteht oder weitere Additive zur Stabilisierung des Gewebes gegen UV-Strahlung oder sonstige Strahlung enthält, da diese geeignet sind, die Alterung des Gewebes zu beschleunigen. Weiterhin ist vorgesehen, dass der Beschichtung bei Polyestergewebe zusätzlich Hydrophobiermittel zugesetzt sind.

Weist die Grundbeschichtung den Zusatz von Aluminium-Partikeln, Additiven zur UV-Stabilisierung und Hydrophobiermittel auf, so handelt es sich aufgrund der protektiven Zusätze im Sinne der vorliegenden Erfindung um eine langlebige Beschichtung. Eine derartige Beschichtung ist besonders widerstandsfähig gegen Alterungsprozesse durch Umwelteinflüsse.

In einer Weiterbildung des erfindungsgemäßen Bespanngewebes ist vorgesehen, dass wenigstens eine, vorzugsweise zwei zusätzliche Schicht(en) als Farbschicht auf das Gewebe aufgetragen sind, wobei diese aus einer anionisch aliphatischen Polyesterpolyurethan-Dispersion, wie oben beschrieben, bestehen und der Dispersion zusätzlich Farbpigmente zugesetzt sind.

Ein derart beschichtetes Bespanngewebe weist demnach eine erste Beschichtung (Grundbeschichtung) und eine zweite Beschichtung, die Farbpigmente enthält, auf. Die zweite Beschichtung wird im Sinne der vorliegenden Erfindung auch als Farbschicht bezeichnet.

Weiterhin ist ein Bespanngewebe vorgesehen, auf dass eine Deckschicht aufgebracht ist. Diese besteht aus einer anionisch aliphatischen Polyesterpolyurethan-Dispersion wie bereits beschrieben und ist mit UV-Blockern und Hydrophobiermitteln versehen.

Erfindungsgemäß ist demnach ein Bespanngewebe vorgesehen, das bis zu drei oder mehr Schichten enthält, wobei nicht zwingend alle Schichten auf das Bespanngewebe aufgebracht sein müssen und eine einzelne Schicht durch mehrfachen Auftrag der entsprechenden Zusammensetzung erhalten werden kann.

In einer weiteren Ausgestaltungsform des erfindungsgemäßen Bespanngewebes wird nicht das Bespanngewebe beschichtet, sondern die Fasern oder Filamente, aus denen das Gewebe gewrikt wird sind zuvor beschichtet worden. Somit ist ein Bespanngewebe für Luftfahrzeuge vorgesehen, bei dem das Gewebe aus Fasern oder Filamenten gewebt ist, die zuvor mit einer vernetzten hitzebeständigen anionisch aliphatischen Polyesterpolyurethan-Dispersion beschichtet sind, wobei die Beschichtung durch Vernetzung einer anionisch aliphatischen Dispersion mit einer OH-Zahl < 0,5 mit einem hydrophilen aliphatischen Polysiocyanat auf der Basis von Hexamethylendiisocyanat mit einem NCO-Wert von 17 bis 18 hergestellt worden ist.

Wie bereits für das Gewebe selbst beschrieben, ist auch für die Fasern oder Filamente eine Mehrfachbeschichtung vorgesehen und es kann ein Beschichtungsaufbau aus Grundbeschichtung, Farbbeschichtung und/oder Deckbeschichtung vorliegen. Derart beschichtete Fasern oder Filament werden dann erst zu einem Gewebe gewirkt, das auch selbst wieder mit dem eingangs beschriebenen Schichtaufbau versehen werden kann.

Als ein kurzlebiges Bespanngewebe für Luftfahrzeuge im Sinne der vorliegenden Erfindung, ist ein Bespanngewebe vorgesehen, dass aus einem Polyester- oder einem Poly-Ether-Ether-Keton-Gewebe besteht, bei dem das Gewebe ausschließlich mit einer vernetzten und farbpigmentierten hitzebeständigen anionisch aliphatischen Polyesterpolyurethan-Dispersion beschichtet ist, wobei die Beschichtung durch Vernetzung einer anionisch aliphatisch farbpigmentierten Dispersion mit einer OH-Zahl < 0,5 mit einem hydrophilen aliphatischen Polysiocyanat auf der Basis von Hexamethylendiisocyanat mit einem NCO-Wert von 17 bis 18 hergestellt worden ist.

Auch für ein kurzlebiges Bespanngewebe ist vorgesehen, dass die Beschichtung des Gewebes aus der Beschichtung der Fasern oder Filamente des Gewebes vor der Webung mit einer vernetzten farbpigmentierten hitzebeständigen anionisch aliphatischen Polyesterpolyurethan-Dispersion entsteht.

Die erfindungsgemäßen Bespanngewebe weisen eine Feinheit von 30 - 350 dtex nach DIN 53830 T3 auf. Dabei ist DIN die Abkürzung für deutsche Industrienorm des deutschen Instituts für Normung e.V.. Diese nationalen Industrienormen können in einem Verzeichnis nachgesehen werden und bilden definierte Standards. Vorliegend wird auf die mit den Nummern bezeichneten Normen Bezug genommen.

Weiter ist erfindungsgemäß vorgesehen, dass die unbeschichtete Grammatur eines erfindungsgemäßen Bespanngewebes nach DIN EN 12127 ein Flächengewicht zwischen 30 g/m² bis 250 g/m² aufweist.

In einer Weiterbildung der Erfindung beträgt die Anzahl der Einzelfilamente, aus denen die Fäden bestehen, in Kette und Schuss zwischen 15 und 50 und die Fadenanzahl nach DIN EN 1049-2 in Kette bei 20 - 50 und in Schuss liegt bei 15 - 40. Zudem ist vorgesehen, dass bei einem erfindungsgemäßen Bespanngewebe die Kettfäden oder Kett- und Schussfäden geschlichtet sind. Durch die Schlichte werden einzelne parallel liegende Filamente zu kompakten Filamentbündeln vereint, wodurch die Duktilität beeinflusst werden kann.

Zur Erzielung einer hohen Festigkeit des Kettfadens eines erfindungsgemäßen Bespanngewebes werden einzelne Filamente des Kettfadens zu Filamentbündeln miteinander verdreht.

Für ein erfindungsgemäßes Bespanngewebe ist vorgesehen, dass der Schrumpf des Gewebes ca. 10% bei einer Temperatur von 150°C längs und quer beträgt. Durch diese erfindungsgemäße Maßnahme wird eine optimale Verarbeitung des Bespanngewebes ermöglicht.

Es ist erfindungsgemäß vorgesehen, dass der Querschrumpf von 10 % während der Trocknung der Beschichtung im Trockenkanal durch Verstreckung im Spannrahmen erreicht wird.

Weiter ist vorgesehen, dass die Webung als Leinwandbindung oder Ripstop erfolgt.

Die Beschichtung des erfindungsgemäßen Bespanngewebes basiert auf einem wässrigen Polyurethansystem. Diese erfindungsgemäße Maßnahme dient Umweltschutzgründen und führt zur Vermeidung von CO₂-Emissionen während der Produktion.

Ein weiterer Gegenstand der Erfindung ist ein Bespanngewebe mit einer oder mehreren der beschriebenen Beschichtungen, welches zusätzlich mit einem Kleber beschichtet ist, der aus einem thermoaktivierbaren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten besteht, wodurch bei einer Wärmezufuhr von mehr als 40°C der Polyurethankleber vernetzt wird.

Letztlich ist auch ein Verfahren zur Bespannung von Luftfahrzeugen, insbesondere Flugzeugen Gegenstand der vorliegenden Erfindung, wobei das Verfahren durch die Abfolge folgender Verfahrensschritte gekennzeichnet ist:
a. ein erfindungsgemäßes Bespanngewebe nach einem der Ansprüche 1 bis 20 wird in dem Bereich, in dem es mit einer Struktur verklebt werden soll mit einem Kleber aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten in Kontakt gebracht,
b. nach dem Trocknen des Klebers wird das Bespanngewebe auf die Struktur gebügelt, und
c. die Bereiche in denen das Bespanngewebe auf die Struktur gebügelt wurde, werden mittels einer geeigneten Wärmequelle (Bügeleisen) auf ungefähr 100°C erhitzt,
d. sobald der Kleber erkaltet ist, werden alle bespannten Flächen mittels einer geeigneten Wärmequelle ( z.B. Quarzstrahler) bei ca. 150°C gespannt.

Somit ist der Kleber auch für ein separates beschichten der beschriebenen beschichteten Bespanngewebe vorgesehen. Zur Verarbeitung kann der Kleber auf die zu bespannende Struktur aufgespritzt werden. Dieses kann auch ausschließlich nur in einem Bereich geschehen, in dem das Bespanngewebe mit der Struktur verklebt werden soll.

Nach dem Trocknen wird die Bespannung auf die Struktur gebügelt. Danach werden alle angebügelten Stellen mittels Heißluftgebläse, einer Wärmestrahlungsquelle oder eines Bügeleisens auf ca. 100°C erhitzt, um eine gesicherte Vernetzung des Klebers zu gewährleisten, indem die verkapselten Isocyanate Ihren Aggregatszustand ändern und so den Polyurethankleber vernetzen. Nach dem Erkalten des Klebers werden alle bespannten Flächen mittels Heißluftgebläse bzw. Wärmequelle bei ca. 150°C gespannt.

Besonders vorteilhaft an der vorliegenden Erfindung ist, dass das Gewebe aufgrund seiner Beschichtung bereits alle sonst einzeln aufzutragenden Schichten enthält. Der Auftrag vieler Schichten, wie beispielsweise gesonderter Lack- oder Farbschichten entfällt, da das Gewebe bereits mit einer farbpigmentierten Schicht versehen sein kann.

Die Verwendung der beschriebenen Dispersion ermöglicht im Vergleich zu verdampfenden Lösungsmitteln eine umweltfreundliche Bespannung. Die vorliegende Erfindung umfasst aber ausdrücklich auch die Verwendung von Lösungsmittel basierenden Polyurethanen.

Durch den erfindungsgemäß verwendeten Kleber wird eine sichere und temperaturunabhängige Verbindung der Bespannung mit der Struktur gewährleistet. Im Gegensatz zu den aus dem Stand der Technik bekannten Lösungen führt eine Temperaturerhöhung nicht dazu, dass der Kleber weich wird, oder das Gewebe Falten schlägt und sogar anfängt auf dem weichen Kleber zu schwimmen.

Die Reaktion des Klebers ist erst bei Temperaturen >100°C reversibel, die nur durch externe Wärmezufuhr erreicht werden können und die Möglichkeit der definierten Entfernung der Bespannung zu Revisions- und Reparaturzwecken ermöglicht. Daher gewährleistet der erfindungsgemäß verwendete Kleber eine dauerhafte Festigkeit.

Im Zusammenhang mit den erfindungsgemäß vorgesehenen Mitteln, welche den Beschichtungen zugesetzt werden, wird der Alterungsprozess des Bespanngewebes beispielsweise durch UV-Strahlung oder andere natürliche Faktoren deutlich verlangsamt.

Bei der Beschichtung des Gewebes ist eine Produktionsanlage mit einem verstellbaren Spannrahmen zu verwenden, damit das Gewebe während der Trocknung quer nachverstreckt werden kann, um die bis zu 10% Querschrumpf zu erhalten bzw. zu erreichen.

Ein weiterer Gegenstand der vorliegenden Erfindung ist ein Kit zur Bespannung von Luftfahrzeugen, enthaltend ein Bespanngewebe nach einem der Ansprüche 1 bis 20 und einen Kleber zur Beschichtung des Gewebes, der aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten besteht.

Ein derartiger Kit bietet alle Mittel, die notwendig sind, um ein Luftfahrzeug, sei es ein Flugzeug oder ein Modellflugzeug mit einem erfindungsgemäßen Bespanngewebe zu bespannen.

Insgesamt führen das erfindungsgemäße Bespanngewebe und die erfindungsgemäße Verklebung dazu, dass deutlich weniger Gewicht auf das zu bespannende Luftfahrzeug aufgebracht wird. Dies ist insbesondere dann vorteilhaft, wenn es sich um kleine oder leichte Flugzeuge, wie Modellflugzeuge oder auch so genannte Ultraleichtflugzeuge handelt.

Wesentlich für die Beschichtung eines Gewebes ist, dass die Beschichtung aufgebracht wird und nicht in das Gewebe bzw. die Fasern oder Filamente des Gewebes eindringt. Die Beschichtung soll auf dem Gewebe aufliegen, um dies vor dem Eindringen von Wasser oder anderen Flüssigkeiten zu schützen.

Ein weiterer Vorteil der "Ummantelung" des Gewebes mit der erfindungsgemäßen Beschichtung ist daher, dass das Gewebe selbst seine Elastizität behält. In den aus dem Stand der Technik bekannten Verfahren werden die Gewebe mit Harzen getränkt. Dies stellt einen Eingriff in die Struktur der Fasern oder Filamente dar, aus denen das Gewebe besteht. Die Trocknung des Harzes oder anderer Flüssigkeiten mit denen ein Bespanngewebe getränkt wird führt zu einem Verlust an Elastizität des Gewebes. Dadurch steigt die Gefahr von Beschädigungen der Bespannung aufgrund der Kräfte, die im Betrieb an einem Luftfahrzeug auftreten, insbesondere an den Tragflächen.

Weiterhin kann der Anwender die Bespannung ohne Verwendung irgendwelcher organischer Lösemittel in Klebern, Spannlack, Verdünnern, Füllern oder Farblack auf ein Luftfahrzeug aufbringen, damit wird ein umweltfreundliches Verfahren zur Bespannung von Luftfahrzeugen zur Verfügung gestellt..

## Patentansprüche

1. Bespanngewebe für Luftfahrzeuge, bestehend aus einem Polyester- oder einem Poly-Ether-Ether-Keton -Gewebe, **dadurch gekennzeichnet, dass** das Gewebe mit einer vernetzten hitzebeständigen anionisch aliphatischen Polyesterpolyurethan-Dispersion beschichtet ist, wobei die Beschichtung durch Vernetzung einer anionisch aliphatischen Dispersion mit einer OH-Zahl < 0,5 mit einem hydrophilen aliphatischen Polyisocyanat auf der Basis von Hexamethylendiisocyanat mit einem NCO-Wert von 17 bis 18 hergestellt worden ist.

2. Bespanngewebe für Luftfahrzeuge, bestehend aus einem Polyester- oder einem Poly-Ether-Ether-Keton -Gewebe, **dadurch gekennzeichnet, dass** das Gewebe aus Fasern oder Filamenten gewebt ist, die zuvor mit einer vernetzten hitzebeständigen anionisch aliphatischen Polyesterpolyurethan-Dispersion beschichtet sind, wobei die Beschichtung durch Vernetzung einer anionisch aliphatischen Dispersion mit einer OH-Zahl < 0,5 mit einem hydrophilen aliphatischen Polyisocyanat auf der Basis von Hexamethylendiisocyanat mit einem NCO-Wert von 17 bis 18 hergestellt worden ist.

3. Bespanngewebe für Luftfahrzeuge nach einem der Ansprüche 1 oder 2, **dadurch gekennzeichnet, dass** das Gewebe oder Fasern oder Filament aus denen das Gewebe besteht, ausschließlich mit einer vernetzten und farbpigmentierten hitzebeständigen anionisch aliphatischen Polyesterpolyurethan-Dispersion beschichtet ist, wobei die Beschichtung durch Vernetzung einer anionisch aliphatisch farbpigmentierten Dispersion mit einer OH-Zahl < 0,5 mit einem hydrophilen aliphatischen Polyisocyanat auf der Basis von Hexamethylendiisocyanat mit einem NCO-Wert von 17 bis 18 hergestellt worden ist.

4. Bespanngewebe nach wenigstens einem der Ansprüche 1 bis 3, **dadurch gekennzeichnet dass** es zusätzlich mit einem Kleber beschichtet ist, der aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten besteht.

5. Bespanngewebe nach wenigstens einem der vorherigen Ansprüche, **dadurch gekennzeichnet, dass** die anionisch aliphatische Dispersion pigmentiert ist

6. Bespanngewebe nach wenigstens einem der Ansprüche 3 bis 5 wobei die Pigmentierung aus Aluminium-Partikeln besteht.

7. Bespanngewebe nach wenigstens einem der vorherigen Ansprüche, **dadurch gekennzeichnet, dass** bei der Verwendung von Polyestergewebeder Beschichtung zusätzlich Hydrophobiermitteln zugesetzt sind.

8. Bespanngewebe nach wenigstens einem der vorherigen Ansprüche, **dadurch gekennzeichnet, dass** wenigstens eine, vorzugweise zwei zusätzliche Schicht(en) als Farbschicht auf das Gewebe aufgetragen wird, bestehend aus einer anionisch aliphatischen Polyesterpolyurethan-Dispersion gemäß Anspruch 1, wobei der Dispersion zusätzlich Farbpigmente zugesetzt sind.

9. Bespanngewebe nach wenigstens einem der vorherigen Ansprüche, **dadurch gekennzeichnet, dass** eine Deckschicht aufgebracht ist , bestehend aus einer anionisch aliphatischen Polyesterpolyurethan-Dispersion gemäß Anspruch 1, die mit UV-Blockern und Hydrophobiermitteln versehen ist.

10. Bespanngewebe nach Anspruch 8, **dadurch gekennzeichnet, dass** die Beschichtung des Gewebes aus der Beschichtung der Fasern oder Filamente des Gewebes vor der Webung mit einer vernetzten farbpigmentierten hitzebeständigen anionisch aliphatischen Polyesterpolyurethan-Dispersion entsteht.

11. Bespanngewebe nach wenigstens einem der vorherigen Ansprüche, **dadurch gekennzeichnet, dass** das Gewebe eine Feinheit von 30 - 350 detex nach DIN 53830 T3 hat.

12. Bespanngewebe nach wenigstens einem der vorherigen Ansprüche, **dadurch gekennzeichnet, dass** die unbeschichtete Grammatur nach DIN EN 12127 ein Flächengewicht zwischen 30 g/m² bis 250 g/m² liegen.

13. Bespanngewebe nach wenigstens einem der vorherigen Ansprüche, **dadurch gekennzeichnet, dass** die Anzahl der Einzelfilamente, aus denen die Fäden bestehen, in Kette und Schuss zwischen 15 und 50 beträgt.

14. Bespanngewebe nach wenigstens einem der vorherigen Ansprüche, **dadurch gekennzeichnet, dass** die Fadenanzahl nach DIN EN 1049-2 in Kette bei 20 - 50 und in Schuss bei 15 - 40 liegt.

15. Bespanngewebe nach wenigstens einem der vorherigen Ansprüche, **dadurch gekennzeichnet, dass** die Kettfäden oder Kett- und Schussfäden geschlichtet sind.

16. Bespanngewebe nach wenigstens einem der vorherigen Ansprüche, **dadurch gekennzeichnet, dass** einzelnen Filamente des Kettfadens zu Filamentbündeln miteinander verdreht sind.

17. Bespanngewebe nach wenigstens einem der vorherigen Ansprüche, **dadurch gekennzeichnet, dass** der Schrumpf des Gewebes 10% bei einer Temperatur von 150°C längs und quer beträgt.

18. Bespanngewebe nach wenigstens einem der vorherigen Ansprüche, **dadurch gekennzeichnet, dass** der Querschrumpf von 10 % während der Trocknung der Beschichtung im Trockenkanal durch Verstreckung im Spannrahmen erreicht wird.

19. Bespanngewebe nach wenigstens einem der vorherigen Ansprüche, **dadurch gekennzeichnet, dass** die Webung als Leinwandbindung oder Ripstop erfolgt.

20. Bespanngewebe nach wenigstens einem der vorherigen Ansprüche, **dadurch gekennzeichnet, dass** die Beschichtung auf einem wässerigen Polyurethansystem basiert.

21. Kit zur Bespannung von Luftfahrzeugen, enthaltend ein Bespanngewebe nach einem der Ansprüche 1 bis 19 und einen Kleber zur Beschichtung des Gewebes, der aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten besteht, wodurch bei einer Wärmezufuhr von mehr als 40°C der Polyurethankleber vernetzt wird.

22. Verfahren zur Bespannung von Luftfahrzeugen, insbesondere Flugzeugen, durch die Abfolge folgender Verfahrensschritte **gekennzeichnet**:
a. ein Bespanngewebe nach einem der Ansprüche 1 bis 20 wird in dem Bereich, in dem es mit einer Struktur verklebt werden soll mit einem Kleber aus einem thermoaktivierbareren, wärmevernetzenden Klebstoff auf Basis einer wässrigen, anionischen Dispersion eines hochmolekularen Polyurethans mit einer OH-Zahl < 0,5 mit einer 15%igen Härterformulierung aus verkapselten Isozyanaten in Kontakt gebracht,
b. nach dem Trocknen des Klebers wird das Bespanngewebe auf die Struktur gebügelt, und
c. die Bereiche in denen das Bespanngewebe auf die Struktur gebügelt wurde, werden mittels einer geeigneten Wärmequelle auf 100°C erhitzt,
d. sobald der Kleber erkaltet ist, werden alle bespannten Flächen mittels einer geeigneten Wärmequelle bei 150°C gespannt.

## Claims

1. Covering fabric for aircraft comprising a polyester- or poly-ether-ether-ketonefabric, **characterised in that** the fabric is coated with a crosslinked heat-resistant anionic aliphatic polyester-polyurethane dispersion, whereby the coating is produced though crosslinking an anionic aliphatic dispersion with an OH-number < 0.5, with a hydrophilic aliphatic polyisocyanate based on hexamethylene diisocyanate with a NCO-value of 17 to 18.

2. Covering fabric for aircraft comprising a polyester- or poly-ether-ether-ketone fabric, **characterised in that** the fabric is woven from fibres or filaments, which are coated before weaving with a crosslinked heat-resistant anionic aliphatic polyester-polyurethane dispersion, whereby the coating is produced through crosslinking an anionic aliphatic dispersion with an OH-number < 0.5 with a hydrophilic aliphatic polyisocyanate based on hexamethylene diisocyanate with a NCO-value from 17 to 18.

3. Covering fabric for aircraft according to one of claims 1 or 2, **characterised in that** the fabric or fibres or filaments of which the fabric comprises, are coated solely with a crosslinked and colour-pigmented heat-resistant anionic aliphatic polyester-polyurethane dispersion, whereby the coating is produced through crosslinking an anionic aliphatic colour-pigmented dispersion with an OH-number < 0.5 with a hydrophilic aliphatic polyisocyanate based on hexamethylene diisocyanate with a NCO-value from 17 to 18.

4. Covering fabric according to at least one of claims 1 to 3, **characterised in that** the fabric is additionally coated with an adhesive, which comprises of a thermo-activatable, heat-crosslinking adhesive substance based on an aqueous anionic dispersion of a high molecular weight polyurethane, with an OH-number < 0.5 and containing a 15% hardening-formulation of encapsulated isocyanates.

5. Covering fabric according to at least one of the preceding claims, **characterised in that** the anionic aliphatic dispersion is pigmented.

6. Covering fabric according to at least one of claims 3 to 5, whereby the pigmentation comprises of aluminium particles.

7. Covering fabric according to at least one of the preceding claims, **characterised in that** in the use of the polyester fabric, additional hydrophobic substances are added to the coating.

8. Covering fabric according to at least one of the preceding claims, **characterised in that** least one, or preferably two, additional coats are applied to the fabric as colour-coats, which comprise of an anionic aliphatic polyester-polyurethane dispersion according to claim 1, whereby additional colour pigments are added to the dispersion.

9. Covering fabric according to at least one of the preceding claims, **characterised in that** a surface-coat is applied, comprising of an anionic aliphatic polyester-polyurethane dispersion according to claim 1, provided with UV-blockers and hydrophobic substances.

10. Covering fabric according to claim 8, **characterised in that** the coating of the fabric comprises of the coating of the fibres or filaments of the fabric before weaving, with a crosslinked colour-pigmented heat-resistant anionic aliphatic polyester-polyurethane dispersion.

11. Covering fabric according to at least one of the preceding claims, **characterised in that** the fabric has a fineness of 30 - 350 detex according to DIN 53830 T3.

12. Covering fabric according to at least one of the preceding claims, **characterised in that** the uncoated gram weight according to DIN EN 12127 has a weight per unit area between 30 g/m² to 250 g/m².

13. Covering fabric according to at least one of the preceding claims, **characterised in that** the number of single filaments, of which the threads are comprised, in warp and weft is between 15 and 50.

14. Covering fabric according to at least one of the preceding claims, **characterised in that** the number of threads according to DIN EN 1049-2 is 20 - 50 in the warp and 15 - 40 in the weft.

15. Covering fabric according to at least one of the preceding claims, **characterised in that** the warp-threads or warp- and weft-threads are sized.

16. Covering fabric according to at least one of the preceding claims, **characterised in that** individual filaments of the warp-threads are twisted with one another to form filament bundles.

17. Covering fabric according to at least one of the preceding claims, **characterised in that** the shrinkage of the fabric amounts to 10% at a temperature of 150°C both longitudinally and transversely.

18. Covering fabric according to at least one of the preceding claims, **characterised in that** the transverse shrinkage of 10% is achieved during the drying of the coating in a drying channel through stretching on a stretching frame.

19. Covering fabric according to at least one of the preceding claims, **characterised in that** the weave takes place as a plain weave or ripstop.

20. Covering fabric according to at least one of the preceding claims, **characterised in that** the coating is based on an aqueous polyurethane system.

21. Kit for covering aircraft, comprising a covering fabric according to one of claims 1 to 19 and an adhesive for coating the fabric, which comprises of a thermo-activatable, heat-crosslinking adhesive substance based on an aqueous anionic dispersion of a high molecular weight polyurethane with an OH-number < 0.5 with a 15% hardening-formulation of encapsulated isocyanates, whereby the polyurethane adhesive is crosslinked by applying heat of more than 40°C.

22. Method for covering aircraft, especially aeroplanes, **characterised by** the sequence of the following method steps:
a. A covering fabric according to one of claims 1 to 20 is brought into contact with an adhesive in the area where it is to be attached to a structure, the adhesive comprising a thermo-activatable, heat-crosslinking adhesive substance based on an aqueous anionic dispersion of a high molecular weight polyurethane with an OH-number < 0.5 with a 15% hardening-formulation of encapsulated isocyanates,
b. after drying the adhesive the covering fabric is ironed onto the structure, and
c. The areas in which the covering fabric was ironed onto the structure are heated by means of a suitable heat-source to 100°C,
d. when the adhesive has cooled, all covered areas are tensed by means of a suitable heat-source at 150°C.

## Revendications

1. Tissu d'entoilage pour aéronefs, constitué par un tissu de polyester ou un tissu de polyétheréthercétone, **caractérisé en ce que** le tissu est enduit avec une dispersion de polyesterpolyuréthane aliphatique anionique réticulée, résistant à la chaleur, l'enduction ayant été obtenue par réticulation d'une dispersion aliphatique anionique possédant un indice OH < 0,5 avec un polyisocyanate hydrophile aliphatique à base d'hexaméthylènediisocyanate possédant une valeur NCO de 17 à 18.

2. Tissu d'entoilage pour aéronefs, constitué par un tissu de polyester ou un tissu de polyétheréthercétone, **caractérisé en ce que** le tissu est tissé à partir de fibres ou de filaments qui ont été enduits au préalable avec une dispersion de polyesterpolyuréthane aliphatique anionique réticulée, résistant à la chaleur, l'enduction ayant été obtenue par réticulation d'une dispersion aliphatique anionique possédant un indice OH < 0,5 avec un polyisocyanate hydrophile aliphatique à base d'hexaméthylènediisocyanate possédant une valeur NCO de 17 à 18.

3. Tissu d'entoilage pour aéronefs selon l'une quelconque des revendications 1 ou 2, **caractérisé en ce que** le tissu ou bien les fibres ou les filaments en lesquels le tissu est constitué, est ou sont enduits de manière exclusive avec une dispersion de polyesterpolyuréthane aliphatique anionique réticulée, colorée avec un pigment et résistant à la chaleur, l'enduction ayant été obtenue par réticulation d'une dispersion aliphatique anionique possédant un indice OH < 0,5 avec un polyisocyanate hydrophile aliphatique à base de d'hexaméthylènediisocyanate possédant une valeur NCO de 17 à 18.

4. Tissu d'entoilage selon au moins une des revendications 1 à 3, **caractérisé en ce qu'**il est enduit en outre avec une colle qui est constituée d'un adhésif thermoréticulable thermoactivable à base d'une dispersion anionique aqueuse d'un polyuréthane à poids moléculaire élevé possédant un indice OH < 0,5 avec une formulation de durcisseur à 15 % constituée par des isocyanates encapsulés.

5. Tissu d'entoilage selon au moins une des revendications précédentes, **caractérisé en ce que** la dispersion aliphatique anionique est pigmentée.

6. Tissu d'entoilage selon au moins une des revendications 3 à 5, la pigmentation étant constituée par des particules d'aluminium.

7. Tissu d'entoilage selon au moins une des revendications précédentes, **caractérisé en ce que**, lorsqu'on utilise un tissu de polyester, on ajoute en outre à l'enduction des agents rendant hydrophobe.

8. Tissu d'entoilage selon au moins une des revendications précédentes, **caractérisé en ce qu'**on applique au moins une couche, de préférence deux couches supplémentaires à titre de couche de couleur sur le tissu, constituées par une dispersion de polyesterpolyuréthane aliphatique anionique selon la revendication 1, des pigments colorés étant ajoutés en outre à la dispersion.

9. Tissu d'entoilage selon au moins une des revendications précédentes, **caractérisé en ce qu'**on applique une couche de revêtement constituée par une dispersion de polyesterpolyuréthane aliphatique anionique selon la revendication 1, qui est munie d'agents bloquant les rayons ultraviolets et d'agents rendant hydrophobe.

10. Tissu d'entoilage selon la revendication 8, **caractérisé en ce qu'**on obtient l'enduction du tissu à partir de l'enduction des fibres ou des filaments du tissu avant le tissage avec une dispersion de polyesterpolyuréthane aliphatique anionique résistant à la chaleur, réticulée et colorée avec un pigment.

11. Tissu d'entoilage selon au moins une des revendications précédentes, **caractérisé en ce que** le tissu possède une finesse de 30 à 350 detex selon la norme DIN 53830 T3.

12. Tissu d'entoilage selon au moins une des revendications précédentes, **caractérisé en ce que** le grammage à l'état non enduit, conformément à la norme DIN EN 12127 possède un poids surfacique entre 30 g/m² et 250 g/m².

13. Tissu d'entoilage selon au moins une des revendications précédentes, **caractérisé en ce que** le nombre des filaments individuels dont sont constitués les fils s'élève, dans le fil de chaîne et dans le fil de trame entre 15 et 50.

14. Tissu d'entoilage selon au moins une des revendications précédentes, **caractérisé en ce que** le nombre de fils, conformément à la norme DIN EN 1049-2 se situe, dans le fil de chaîne entre 20 et 50 et dans le fil de trame entre 15 et 40.

15. Tissu d'entoilage selon au moins une des revendications précédentes, **caractérisé en ce que** les fils de chaîne ou les fils de chaîne et les fils de trame sont encollés.

16. Tissu d'entoilage selon au moins une des revendications précédentes, **caractérisé en ce que** des filaments individuels du fils de chaîne sont torsadés les uns avec les autres pour former des faisceaux de filaments.

17. Tissu d'entoilage selon au moins une des revendications précédentes, **caractérisé en ce que** le retrait du tissu s'élève à 10 % en direction longitudinale et en direction transversale à une température de 150 °C.

18. Tissu d'entoilage selon au moins une des revendications précédentes, **caractérisé en ce qu'**on obtient le retrait transversal de 10 % lors du séchage de l'enduction dans le tunnel de séchage par étirage dans la rame.

19. Tissu d'entoilage selon au moins une des revendications précédentes, **caractérisé en ce que** le tissage a lieu sous la forme d'une armure toile ou d'un ripstop.

20. Tissu d'entoilage selon au moins une des revendications précédentes, **caractérisé en ce que** l'enduction est à base d'un système de polyuréthane aqueux.

21. Nécessaire pour l'entoilage d'aéronefs, contenant un tissu d'entoilage selon l'une quelconque des revendications 1 à 19 et une colle pour l'enduction du tissu, qui est constituée par un adhésif thermoréticulable et thermoactivable à base d'une dispersion anionique aqueuse d'un polyuréthane à poids moléculaire élevé possédant un indice OH < 0,5 avec une formulation de durcisseur à 15 % constituée par des isocyanates encapsulés, l'adhésif de polyuréthane étant réticulé via un apport de chaleur de plus de 40 °C.

22. Procédé pour l'entoilage d'aéronefs, en particulier d'avions, **caractérisé par** la succession des étapes opératoires suivantes :
a. un tissu d'entoilage selon l'une quelconque des revendications 1 à 20, dans la zone dans laquelle il doit être collé à une structure, est mis en contact avec une colle constituée par un adhésif thermoréticulable et thermoactivable à base d'une dispersion anionique aqueuse d'un polyuréthane à poids moléculaire élevé possédant un indice OH < 0,5 avec une formulation de durcisseur à 15 % constituée par des isocyanates encapsulés,
b. après le séchage de la colle, le tissu d'entoilage est appliqué sur la structure par repassage, et
c. les zones dans lesquelles le tissu d'entoilage a été appliqué sur la structure par repassage sont chauffées à 100 °C au moyen d'une source de chaleur appropriée,
d. dès que la colle est refroidie, toutes les surfaces entoilées sont tendues à une température de 150 °C au moyen d'une source de chaleur appropriée.
